Europäisches Patentamt

European Patent Office

Office européen des brevets

(19)

(11) Veröffentlichungsnummer: **0 272 370 B1**

(12) **EUROPÄISCHE PATENTSCHRIFT**

(45) Veröffentlichungstag der Patentschrift:
24.01.90

(21) Anmeldenummer: 87109673.1

(22) Anmeldetag: 06.07.87

(51) Int. Cl.⁴: **F16L 3/12**, F24D 3/14

(54) Rohrführungsbogen.

(30) Priorität: 23.12.86 DE 8634435 U

(43) Veröffentlichungstag der Anmeldung:
29.06.88 Patentblatt 88/26

(45) Bekanntmachung des Hinweises auf die Patenterteilung:
24.01.90 Patentblatt 90/4

(84) Benannte Vertragsstaaten:
AT BE CH ES FR GB IT LI

(56) Entgegenhaltungen:
CH-A- 598 527
DE-A- 3 110 383
DE-A- 3 326 223
DE-U- 8 614 639
DE-U- 8 615 470

(73) Patentinhaber: REHAU AG + Co, Rheniumhaus,
D-8673 Rehau(DE)

(72) Der Erfinder hat auf seine Nennung verzichtet

**Beschreibung**

Die Erfindung betrifft einen als Halbschale ausgebildeten Rohrführungsbogen aus starrem Material zum Umlenken von Rohren, insbesondere von Heizungs- und Installationsrohren aus Kunststoff, wobei in dem Rohrführungsbogen an wenigstens einem seiner freien Enden Halteelemente angeordnet sind.

Ein derartiger Rohrführungsbogen ist aus der CH-A 598 527 bekannt.

Aus dem DE-U 86 15 470.2 ist ein solcher Rohrführungsbogen bekannt, der auf einer Gebäudedecke zu befestigen ist. Mit diesem bekannten Rohrführungsbogen kann ein flexibles Schutzrohr, Wellrohr oder dergleichen, um ca 90° umgelenkt werden, wobei das Heizungsrohr selbst lose in dem Schutzrohr geführt ist. Das kennzeichnende Merkmal dieses bekannten Rohrführungsbogens wird darin gesehen, daß am oberen Ende des Bogens eine Rohrschelle angeordnet ist, welche auf einen dem Innenrohr entsprechenden Umfang zusammendrückbar ist. Diese Rohrstelle kann einstückig aus dem Material des Rohrführungsbogens hergestellt oder mit diesem lösbar verbunden sein. Der Rohrführungsbogen selbst ist aus Metall hergestellt. Im Einsatz wird das Wellrohr mit dem lose darin geführten Innenrohr in den unteren Bereich des Rohrbogens eingesetzt und im Führungsbereich des Rohrbogens nach oben umgebogen. Der Rohrbogen kann dabei bereits durch entsprechende Befestigungslaschen im unteren Bereich an der Decke befestigt werden. Beim Abschluß des Biegevorganges wird die Rohrschelle am oberen Ende des Rohrführungsbogens über ihre Spannschraube zusammengepresst, bis annähernd ein dem Innenrohr entsprechender Umfang erreicht ist. Dadurch wird sowohl das Schutzrohr als auch das Innenrohr in diesem Bereich festgehalten. Aufgrund der losen Führung des Innenrohres in dem Schutzrohr sollen die temperaturbedingten Längenänderungen ausgeglichen werden. Der Nachteil dieser bekannten Anordnung wird in der umständlichen Handhabung gesehen. Darüber hinaus muß der Rohrführungsbogen immer auf eine ebene Unterlage - Decke, Wand - montiert werden. Er eignet sich deshalb nicht für frei verlegte Leitungen. Als weiterer Nachteil ist anzuführen, daß sich auf diesen Rohrführungsbogen wegen seiner sperrigen Bauweise und wegen des erforderlichen Kontaktes mit der Unterlage eine wärmedämmende Umhüllung nicht oder nur unter schwierigsten Umständen aufbringen läßt.

Aus dem DE-U 8 614 639.4 ist eine Rohrstütze zur Abstützung von Rohrbögen bekannt geworden, welche einen gebogenen, schalenförmigen Rundkörper mit schalenartigen Halterungen an den beiden Endbereichen aufweist. Hier besteht der Nachteil darin, daß das Schutzrohr mit dem Innenrohr oder das Innenrohr allein in den schalenförmigen Grundkörper, der sich im Querschnitt über einen Winkel von mindestens 120° erstreckt, regelrecht eingeknüpft werden muß. Dieser Einknüpfvorgang bedeutet ein Arbeiten in verschiedenen Richtungsdimensionen, so daß der Installateur bei der bekannt starren Verhaltensweise von Heizungsrohren aus vernetzten oder unvernetzten Polymeren, die dazu noch in Schutzrohren geführt sein können, vor einer schier unlösbaren Aufgabe steht.

Hier setzt die Erfindung ein, die es sich zur Aufgabe gestellt hat, eine einfache Handhabung bei der Verbindung von Heizungs- und Installationsrohren aus Polymeren mit oder ohne Schutzrohren mit dem Rohrführungsbogen anzugeben. Erfindungsgemäß wird dazu vorgeschlagen, daß die an den freien Enden des Rohrführungsbogens angeordneten Halteelemente stufenförmig ausgebildet sind mit einem ersten, endenseitigen Vorsprung, einem anschließenden langgestreckten Rücksprung und einem dessen Länge begrenzenden zweiten Vorsprung, und daß der Länge des Rücksprungs wenigstens die Länge einer flexiblen Rohrhülse entspricht, welche über das Rohr und den ersten, endenseitigen Vorsprung geschoben ist, am zweiten Vorsprung anstößt und das Rohr in dieser Lage haltert.

Die Halterung des Rohres in dem erfindungsgemäßen Rohrführungsbogen erfolgt also in erster Linie über die flexible Rohrhülse, welche im Bereich des langgestreckten Rücksprungs zwischen dem endenseitigen Vorsprung und dem zweiten Vorsprung gehaltert ist. Da das Heizungsrohr aus einem Polymeren mit oder ohne Schutzrohr nur unter Kraftanwendung in den Anlagebereich des Rohrführungsbogens eingebracht werden kann, hat dieses Rohr oder die Rohrkombination gleich nach Beendigung des Biegevorgangs das Bestreben, sich wieder in die gestreckte Lage zurückzubewegen. Diese Kraft bewirkt, daß die flexible Rohrhülse im Bereich des langgestreckten Rücksprungs einem Verformungsvorgang unterzogen wird, derart, daß die runde Rohrhülse in eine ovale Form übergeht. Sie hintergreift dabei den ersten, endenseitigen Vorsprung am Rohrführungsbogen und wird dadurch unverrückbar in ihrem Haltesitz festgelegt.

Es hat sich als vorteilhaft erwiesen, daß der zweite Vorsprung die Seitenwände der Halbschale überragt. Auf diese Weise kann er als Anschlag für die Rohrhülse bei deren Aufschieben über das Ende des Rohrführungsbogens dienen. Dieser zweite Vorsprung kann auch aus einer Anzahl über den Umfang der Halbschale des Rohrführungsbogens verteilten Anschlagerhöhungen für die Rohrhülse gebildet sein.

Dem gegenüber ist erfindungsgemäß der erste, endenseitige Vorsprung in der Höhe niedriger als die Seitenwände der Halbschale ausgebildet. Auf diese Weise kann die Rohrhülse beim Aufschieben auf den Rohrführungsbogen diesen Vorsprung leichter überwinden. Bei der anschließenden Verformung der Rohrhülse vom runden in den ovalen Zustand durch die Spannkraft des gebogenen Rohres werden die zugeordneten Teilbereiche der Rohrhülse dann hinter den ersten, endenseitigen Vorsprung gezogen, wodurch dann eine Verschiebesicherung der Rohrhülse erzielbar ist.  ·

Der langgestreckte Rücksprung zwischen dem ersten Vorsprung und dem zweiten Vorsprung ist zweckmäßigerweise niedriger gehalten als die Seitenwände der Halbschale des Rohrführungsbogens. Auf diese Weise kann die Verformung der Rohrhülse durch Spannungsrelaxation in eine größere Ovalität übergehen.

Zur Befestigung des Rohrführungsbogens am Untergrund kann vorteilhaft über dem Rohrführungsbogen im Bereich des zweiten Vorsprungs eine zweigeteilte Rohrschelle angeordnet sein, deren Unterteil mit dem Untergrund durch geeignete Haltemittel fest verankerbar ist und deren Oberteil als schellenartige Halterung mit dem Unterteil lösbar verbunden ist. Letztlich kann es noch vorteilhaft sein, daß im Bereich des zweiten Vorsprungs eine Verdrehsicherung für die Rohrschelle angeformt ist. Diese Verdrehsicherung sorgt für einen einwandfreien Sitz der Rohrschelle auf dem Rohrführungsbogen mit dem eingelegten Rohr.

In der Zeichnung sind Ausführungsbeispiele des erfindungsgemäßen Rohrführungsbogens schematisch dargestellt; es zeigt:

Fig. 1 den Rohrführungsbogen mit zwei Rohrhülsen.

Fig. 2 den Rohrführungsbogen mit eingelegter Innen-Außenrohrkombination und Befestigungsschelle.

Fig. 3 den Schnitt durch die Linie A-A aus Fig. 2.

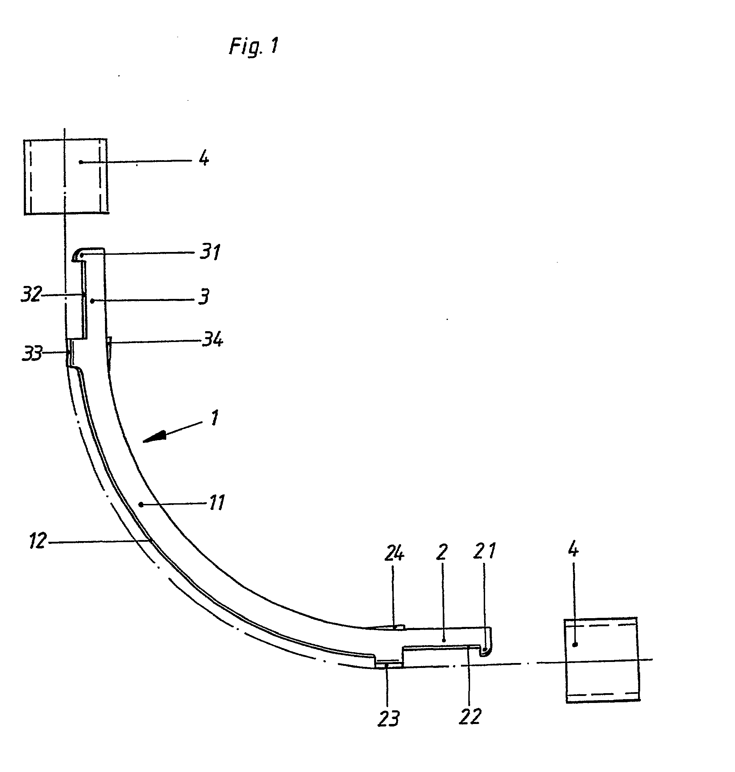

In Fig. 1 ist der Rohrführungsbogen 1, bestehend aus der Halbschale 11 mit den Seitenwänden 12, 13 dargestellt, wobei aufgrund der gezeigten Seitenansicht nur die Seitenwand 12 sichtbar ist. An den freien Enden der Halbschale 11 sind die Halteelemente 2, 3 angeformt. Die Halteelemente 2, 3 besitzen endenseitig einen ersten Vorsprung 21, 31, an den sich der langgestreckte Rücksprung 22, 32 anschließt. Die Länge diese Rücksprungs 22, 32 entspricht in etwa der Länge der flexiblen Rohrhülse 4.

Am Ende des Rücksprungs 22, 32 ist der zweite Vorsprung 23, 33 ausgeformt, der die Länge des Rücksprungs 22, 32 begrenzt. Sichtbar sind in dieser Darstellung auch die Anschlagerhöhungen 24, 34 zur Begrenzung der Verschiebemöglichkeit der Rohrhülse 4 über den Rücksprung 22, 32 hinaus.

Das Arbeiten mit dem erfindungsgemäßen Rohrführungsbogen 1 wird kurz wie folgt geschildert:

Zunächst werden die Rohrhülsen 4 über das abzubiegende Ende des Rohres 5 oder die Innen-Außenrohrkombination 5, 51 geschoben in eine Lage etwa beidseitig des Biegebereiches. Sodann wird das untere Ende des Rohrführungsbogens vom Biegebereich aus zum abzubiegenden Ende hin zwischen das Rohr 5 oder die Rohrkombination 5, 51 und die Rohrhülse gesteckt bis zum Anschlag an die zweiten Vorsprünge 23 und/oder die Anschlagerhöhung 24. Sodann wird das Rohr 5 oder die Rohrkombination 5, 51 in der Halbschale 11 des Rohrführungsbogens so weit gebogen, daß die zweite Rohrhülse 4 über die Vorsprünge 31 bis zum Anschlag an die zweiten Vorsprünge 33 und/oder die Anschlagerhöhungen 34 gestreift werden kann. Das Biegen kann von einer Person in der Weise erfolgen, daß das Rohr oder die Rohrkombination mit einer Hand in die Biegeschale 11 gedrückt wird, während die andere Hand die zur Biegekraft erforderliche Gegenkraft durch Abstützen auf dem Rücken der Halbschale 11 aufbringt, im Endzustand der Biegung schließlich eine Hand im Bereich des langgestreckten Rücksprunges 3 sich an der Rückseite der Halbschale 11 abstützt und das Rohr 5 oder die Rohrkombination 5, 51 festhält, während die andere Hand das Aufschieben der Hülse übernimmt.

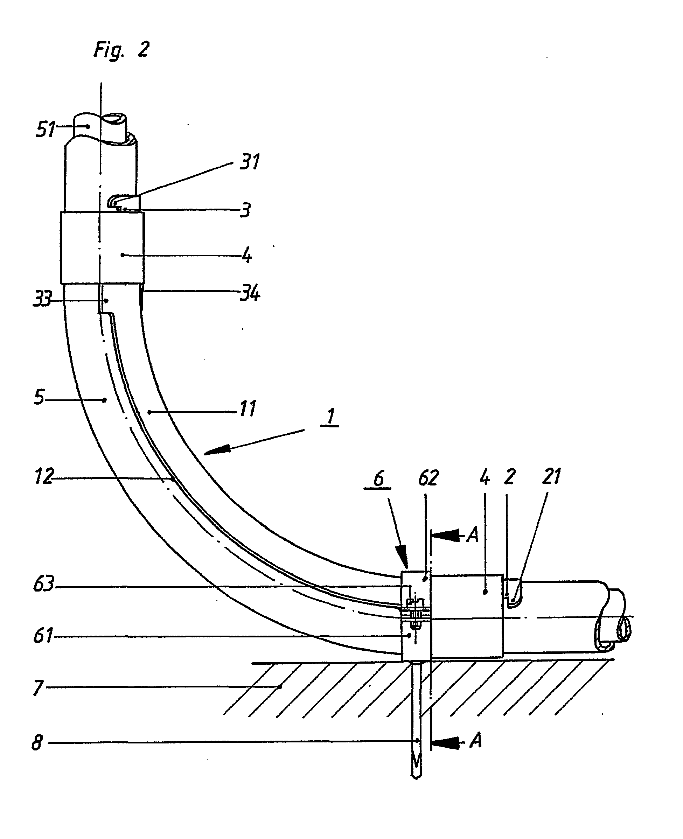

Mit Erreichen des Endsitzes der Hülsen 4 am Anschlag der zweiten Vorsprünge 23, 33 wirken die Biegekräfte des Rohres 5 bzw. der Rohrkombination 5, 51 auf die Hülsen 4. Die dabei entstehenden Kräfte verformen die Rohrhülsen 4 aus der bis dahin runden Form in eine ovale Form. Die Annahme der ovalen Form wird dadurch unterstützt, daß die Rücksprünge 22, 32 niedriger sind als die Seitenwände 12, 13 der Halbschale 11. Infolge Spannungsrelaxation des Rohres 5 bzw. der Rohrkombination 5, 51 lassen die Biegekräfte nach und die Verformung der Rohrhülsen 4 kommt zum Stillstand. Die geschilderte Situation des Endstadiums der Halterung des Rohres 5 bzw. der Rohrkombination 5, 51 ist in Fig. 2 dargestellt. Gleiche Teile haben hier gleiche Bezugszeichen erhalten. Zusätzlich ist bei Fig. 2 die Halterung des Rohrführungsbogens 1 über eine zweigeteilte Rohrschelle 6 durch geeignete Haltemittel 8 am Untergrund 7 dargestellt. Die zweigeteilte Rohrschelle 6 besteht aus einem Oberteil 62 und einem Unterteil 61, und dem als geeignetes Haltemittel 8 beispielsweise ein Nageldübel angeordnet ist.

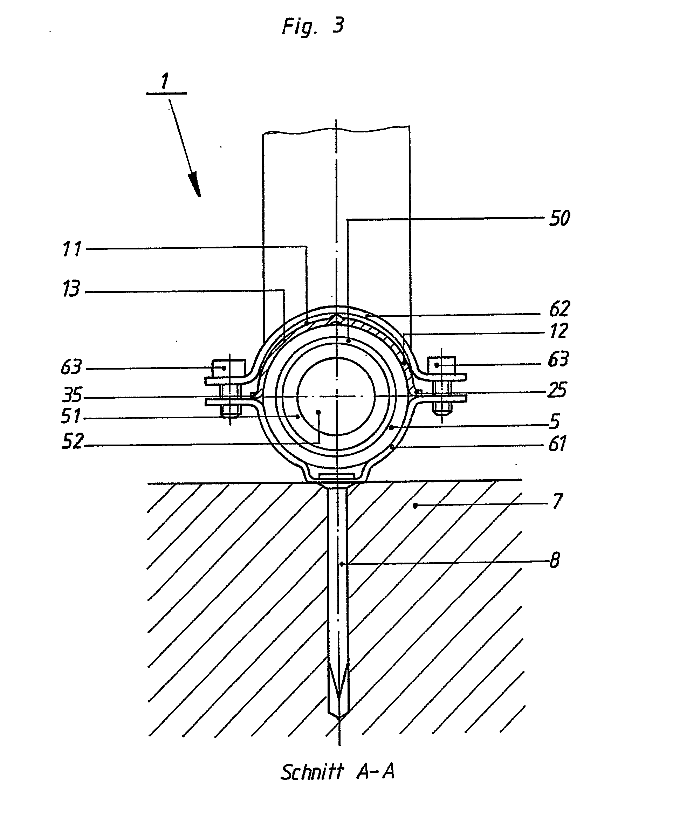

Die Halterung des Rohrführungsbogens 1 mit dem eingesetzten Rohr 5 oder der Rohrkombination 5, 51 ist im Schnitt durch die Linie A-A der Fig. 2 in Fig. 3 verdeutlicht. Auch hier haben gleiche Teile gleiche Bezugszahlen erhalten. Die dargestellte Rohrkombination 5, 51 zeigt, daß das Innenrohr 51 im Lumen 50 des Außenrohres 5 mit Spiel gehalten ist. Das Lumen des Innenrohres ist mit der Bezugsziffer 52 versehen. Über dieser Rohrkombination 5, 51 ist die Halbschale 11 des Rohrführungsbogens 1 mit den Seitenwänden 12, 13 angeordnet. Die Halbschale 11 ist über die Rohrschelle 6 und deren Haltemittel 8 mit dem Untergrund 7 fest verankert. Die Rohrschelle 6 ist in der Zeichnung aus zwei Halbschalen 61, 62 gebildet, welche über die Verbindungsmittel 63, die Schraubverbindungen sein können, lösbar aufeinander festgelegt sind. Die Rohrschelle selbst ist durch Verdrehsicherungen 25, 35 verdrehgesichert, wobei diese Verdrehsicherungen 25, 35 and den freien Enden der Seitenwände 12, 13 der Halbschale 11 ausgeformt sind.

**Patentansprüche**

1. Als Halbschale ausgebildeter Rohrführungsbogen aus starrem Material zum Umlenken von Rohren, insbesondere von Heizungs- und Installationsrohren aus Kunststoff, wobei in dem Rohrführungsbogen an wenigstens einem seiner freien Enden Halteelemente angeordnet sind, dadurch gekennzeichnet, daß die Halteelemente (2, 3) stufenförmig ausgebildet sind mit einem ersten, endenseitigen Vorsprung (21, 31), einem anschließenden langgestreckten Rücksprung (22, 32) und einem dessen Länge begrenzenden zweiten Vorsprung (23, 33), und daß der Länge des Rücksprungs (22, 32) wenigstens die Länge einer flexiblen Rohrhülse (4) entspricht, welche über das Rohr (5) und den ersten, endenseitigen Vorsprung (21, 31) geschoben ist, am zweiten Vorsprung (23, 33) anstößt und das Rohr (5) in dieser Lage haltert.

2. Rohrführungsbogen nach Anspruch 1, dadurch gekennzeichnet, daß der zweite Vorsprung (23, 33) die Seitenwände (12, 13) der Halbschale (11) überragt.

3. Rohrführungsbogen nach Anspruch 2, dadurch gekennzeichnet, daß der zweite Vorsprung (23, 33) aus einer Anzahl über den Umfang der Halbschale (11) verteilten Anschlagerhöhungen (24, 34) für die Rohrhülse (4) gebildet ist.

4. Rohrführungsbogen nach Anspruch 1, dadurch gekennzeichnet, daß der erste, endenseitige Vorsprung (21, 31) in der Höhe niedriger ist als die Seitenwände (12, 13) der Halbschale (11).

5. Rohrführungsbogen nach Anspruch 1, dadurch gekennzeichnet, daß der langgestreckte Rücksprung (22, 32) zwischen dem ersten Vorsprung (21, 31) und dem zweiten Vorsprung (23, 33) niedriger ist als die Seitenwände (11, 13) der Halbschale (11).

6. Rohrführungsbogen nach einem oder mehreren der vorangegangenen Ansprüche, dadurch gekennzeichnet, daß über dem Rohrführungsbogen (1) im Bereich des zweiten Vorsprungs (23, 33) eine zweigeteilte Rohrschelle (6) angeordnet ist, deren Unterteil (61) mit dem Untergrund (7) durch geeignete Haltemittel (8) fest verankerbar ist und deren Oberteil (62) als schellenartige Halterung über lösbare Verbindungsmittel (63) mit dem Unterteil (61) verbunden ist.

7. Rohrführungsbogen nach Anspruch 6, dadurch gekennzeichnet, daß im Bereich des zweiten Vorsprungs (23, 33) eine Verdrehsicherung (25, 35) für die Rohrschelle (6) ausgeformt ist.

**Revendications**

1. Coude de guidage de tuyaux en forme de semi-coque, exécuté en matière rigide et destiné à la déviation de tuyaux, tout particulièrement de tuyaux de chauffage et tubes d'installation, des éléments de retenue étant disposés dans le coude de guidage de tuyaux, au moins à l'une des extrémités libres de celui-ci, caractérisé par le fait que les éléments de retenue (2, 3) sont échelonnés, présentant une première saillie disposée aux extrémités (21, 31), suivie d'un retrait allongé (22, 32) et d'une seconde saillie (23, 33) qui limite la longueur de ce dernier, et que la longueur du retrait (22, 32) correspond au moins à la longueur d'un couvre-joint tubulaire flexible (4), glissé sur le tuyau (5) et la première saillie d'extrémité (21, 31) aboutissant à la seconde saillie (23, 33) et maintenant le tuyau (5) dans cette position.

2. Coude de guidage de tuyaux selon revendication 1, caractérisé par le fait que la seconde saillie (23, 33) dépasse en hauteur les parois latérales (12, 13) de la semi-coque (11).

3. Coude de guidage de tuyaux selon revendication 2, caractérisé par le fait que la seconde saillie (23, 33) est formée par un nombre d'élévations (24, 34), réparties sur le périmètre de la semi-coque (11) et servant de butées pour le couvre-joint tubulaire (4).

4. Coude de guidage de tuyaux selon revendication 1, caractérisé par le fait que la première saillie d'extrémité (21, 31) est inférieure en hauteur aux parois latérales (12, 13) de la semi-coque (11).

5. Coude de guidage de tuyaux selon revendication 1, caractérisé par le fait que le retrait allongé (22, 32) s'étendant entre la première saillie (21, 31) et la seconde saillie (23, 33) est inférieur en hauteur aux parois (11, 13) de la semi-coque (11).

6. Coude de guidage de tuyaux selon une ou plusieurs revendications précédentes, caractérisé par le fait qu'un collier, divisé en deux pièces, (6) est disposé sur le coude de guidage de tuyaux (1), dans le secteur de la seconde saillie (23, 33), collier dont la partie inférieure (61) peut êtreancrée sur la surface de base (7) à l'aide de moyens de fixation (8) appropriés et dont la partie supérieure (62), en tant que dispositif de fixation genre bride, est reliée à la partie inférieure (61) par l'intermédiaire d'un moyen d'assemblage amovible (63).

7. Coude de guidage de tuyaux selon revendication 6, caractérisé par le fait qu'une sécurité anti-torsion (25, 35) est formée, pour la bride (6), dans le secteur de la seconde saillie (23, 33).

**Claims**

1. A pipe guide elbow of rigid material designed in the form of a half shell for guiding pipes, in particular plastic heating and installation pipes, in a given direction, whereby at least one of the free ends of these pipe guide elbows exhibits a mounting element, characterized in that the mounting elements (2, 3) are stepped with a projection (21, 31) at one end, a subsequent extended recess (22, 32) and a second projection (23, 33) limiting the length of the recess, and that the length of the recess (22, 32) corresponds to at least the length of a flexible pipe sleeve (4) which is pushed over the pipe (5) and the first end projection (21, 31), butting against the second projection (23, 33) and holding the pipe (5) in this position.

2. A pipe guide elbow in accordance with Claim 1, characterized in that the second projection (23, 33) protrudes above the side walls (12, 13) of the half shell (11).

3. A pipe guide elbow in accordance with Claim 2, characterized in that the second projection (23, 33) consists of a number of raised contact points (24, 34) for the pipe sleeve (4) distributed over the circumference of the half shell (11).

4. Pipe guide elbow in accordance with Claim 1, characterized in that the height of the first end projection (21, 31) is less than that of the side walls (12, 13) of the half shell (11).

5. Pipe guide elbow in accordance with Claim 1, characterized in that the height of the extended recess (22, 32) between the first projection (21, 31) and second projection (23, 33) is less than that of the side walls (12, 13) of the half shell (11).

6. Pipe guide elbow in accordance with one or several of the above Claims, characterized in that a two-piece pipe clamp (6) is located over the pipe guide elbow (1) in the vicinity of the second projection (23, 33), the lower section of which (61) can be firmly anchored to the substructure (7) by suitable mounting elements (8), and that the upper section (62) is a clamp-like mounting which is joined to the lower section (61) by separable connectors (63).

7. Pipe guide elbow in accordance with Claim 6, characterized in that an anti-twisting lock (25, 35) for the pipe clamp (6) is moulded into the elbow in the vicinity of the second projection (23, 33).

*Fig. 1*

Fig. 2

Fig. 3

Schnitt A—A